(19) Europäisches Patentamt
European Patent Office
Office européen des brevets

(11) **EP 0 673 877 B1**

(12) **EUROPEAN PATENT SPECIFICATION**

(45) Date of publication and mention
of the grant of the patent:
**17.12.1997 Bulletin 1997/51**

(51) Int. Cl.$^6$: **C01B 3/44**

(21) Application number: **95104013.8**

(22) Date of filing: **18.03.1995**

(54) **Synthesis gas preparation**

Herstellung von Synthesegas

Préparation de gaz de synthèse

(84) Designated Contracting States:
**DE FR GB IT NL**

(30) Priority: **25.03.1994 US 218552**

(43) Date of publication of application:
**27.09.1995 Bulletin 1995/39**

(73) Proprietor:
**EXXON RESEARCH AND ENGINEERING
COMPANY
Florham Park, New Jersey 07932-0390 (US)**

(72) Inventor: **Long, David Chester
Baton Rouge, LA 70820 (US)**

(74) Representative:
**Fletcher Watts, Susan J. et al
ESSO Engineering (Europe) Limited,
Patents and Licences,
Mailpoint 72,
Esso House,
Ermyn Way
Leatherhead, Surrey KT22 8XE (GB)**

(56) References cited:
**GB-A- 986 668        US-A- 2 681 272
US-A- 3 138 438**

## Description

This invention relates to the production of synthesis gas, hydrogen and carbon monoxide, by a combination catalytic steam reforming-partial oxidation process. More particularly, this invention relates to a method for eliminating or substantially reducing solids agglomeration in such processes.

## BACKGROUND OF THE INVENTION

One problem encountered in fluid-bed partial oxidation processes is the agglomeration of solids by virtue of exposure of the solids to high temperature oxygen flames. High temperatures are the result of combustion of the feed in an oxygen rich zone at the point(s) of oxygen injection. We believe the temperature of the flame may increase with increasing ratios of oxygen to feed up to the stoichiometric ratio for achieving complete combustion.

Little has been written about preventing agglomeration in partial oxidation or steam reforming processes. However, U.S. 2,681,272 shows more than one point of oxygen injection, although the amount of oxygen injected is not specified, nor has the problem to be solved here recognized in this early patent. U.S. 3,138,438 discloses diluting the oxygen and the feed with steam, but separately injects both the oxygen and steam.

The steam reforming process described, as

$$CH_4 + H_2O \rightarrow CO + 3H_2$$

is highly endothermic, while the partial oxidation process described as

$$CH_4 + O_2 \rightarrow CO + H_2 + H_2O$$

is highly exothermic. The combination of the two is mildly exothermic:

$$CH_4 + 1/2\ O_2 \rightarrow CO + 2H_2$$

and the water gas shift also occurs

$$CO + H_2O \rightarrow H_2 + CO_2.$$

Thus, the stoichiometric ratio of $CH_4$:$H_2O$:$O_2$ is 1:1:0.5 and produces 2:1 hydrogen: carbon moxide synthesis gas suitable for hydrocarbon synthesis, e.g., the Fischer-Tropsch process. The $H_2$:CO ratio can be varied by various means, e.g., temperature, pressure, addition of $CO_2$.

We propose reducing or eliminating solids agglomeration in a combination steam reforming partial/oxidation process by reducing the oxygen concentration at oxygen injection point(s).

## SUMMARY OF THE INVENTION

This invention provides a steam reforming-partial oxidation process for producing hydrogen and carbon monoxide by reacting, in a reaction zone containing a fluid bed of catalytic or non-catalytic solids, or both catalytic and non-catalytic solids, a hydrocarbon feed, oxygen, steam and, optionally, carbon dioxide which comprises, mixing, in a mixing zone absent any catalytic solids (no reaction occurs in the mixing zone), the hydrocarbon feed and a portion of the oxygen required for the process such portion being less than that required to be at the upper explosive limit of oxygen-feed mixtures, and transferring said mixture to the reaction zone separately from the remaining oxygen required for the process. The mixing of the feed with a portion of the oxygen provides a well mixed low oxygen concentration gas at the point of feed injection into the reactor. Consequently, the solids in the reactor do not see excessive flame temperatures and agglomeration is reduced. Only a portion of the oxygen is pre-mixed with the hydrocarbon feed since pre-mixing all of the oxygen required for the reaction with the feed can lead to a potentially explosive mixture outside the reaction zone. The pre-mixed oxygen and methane, and optionally steam, is then transferred to the reaction zone separately from the remaining oxygen, which may also be mixed with steam for injection into the reactor. Consequently, the amount of oxygen pre-mixed with the hydrocarbon feed is limited, thereby maintaining the resulting mixture above the upper explosive limit. For example at ambient temperatures and pressures the upper explosive limit for a methane-oxygen mixture is 60 vol% methane, 40 vol% oxygen. However, as temperature and pressure increase the upper explosive limit also increases and the amount of oxygen that can be pre-mixed with feed decreases. One skilled in the art can readily ascertain the upper explosive limit at any set of temperatures and pressures for any hydrocarbon feed-oxygen mixture. For example, the upper explosive limit can be determined by reference to Bureau of Mines Bull. #503 (1952).

Splitting the oxygen injection does not change the total moles of oxygen required for the process, which is maintained constant. However, the oxidizing potential of each portion of oxygen is reduced; thus, less than the total amount of oxygen injected with the feed results in that fraction of combustion occurring and, therefore, a lower temperature combustion. The same is true for the remaining portion of the oxygen injected into the reaction zone. Since less than the total amount of oxygen needed for reaction, i.e., on a total feed basis, is injected at the oxygen injection point(s), the dilution of the oxygen at these point(s) is increased, and the combustion temperature thus reduced.

The portion of the feed mixed with oxygen in the mixing zone is a substantial portion of the feed, e.g., at least about 80%, preferably at least about 90%, of the feed. If less than all of the feed is premixed, the remaining portion of the feed is injected into the reactor, preferably at a point away from the combustion zone. Since less than the total amount of oxygen needed for reaction, i.e., on a total feed basis, is injected at the oxygen injection point(s), the dilution of the oxygen at these point(s) is increased, and the combustion temperature thus reduced.

Steam is present in the reaction mixture, acting as a moderator for the partial oxidation reaction and as a reactant for the steam reforming reaction, and is usually introduced into the reaction zone in mixture with the oxygen and the hydrocarbon feed. Preferably methane and steam are premixed in a molar ratio of 1:1 to 3:1, preferably 1.5:1 to 2.5:1. The overall molar ratio of oxygen to methane for the reaction is 0.2:1 to 1:1, preferably 0.4:1 to 0.6:1.

Nevertheless, a portion of the oxygen is pre-mixed with the feed which is preferably also premixed with steam. The oxygen premixed with the feed is less than all of the oxygen employed in the reaction and is limited to maintain the mixture above the upper explosive limit. Thus, the oxygen content of the premixed oxygen, feed, and optionally steam, mixtures is about 5% to 30% of the total oxygen required for reaction, preferably 10% to 25%, more preferably about 10-15%.

The mixing zone where oxygen and methane are mixed before entering the reaction zone should be at conditions that do not result in ignition of the mixture. Thus, the mixture, as stated previously, must be above the upper explosive limit for oxygen-methane mixtures and the zone preferably should not contain any catalytic solids or hot non-catalytic solids that can cause ignition of the mixture. Preferably, the mixing zone does not contain any solids.

Subsequent to the mixing of the oxygen and methane, and preferably steam, the mixture is transferred into the reaction zone separately from the remaining amount of oxygen required for the process which may also be mixed with steam.

The steam reforming-partial oxidation process comprises reacting a suitable hydrocarbon feed, e.g., a $C_1$-$C_4$ alkane, in the presence of heat carrying solids, with oxygen and steam, and optionally, small amounts of carbon dioxide, to produce a synthesis gas, hydrogen and carbon monoxide.

The process may be conducted at temperatures of at least 900°C, preferably above 925°C, and more preferably in the range of 925°C to 1200°C. Pressures may vary widely, e.g., atmospheric pressure, preferably about 1-100 bar, more preferably 20-100 bar.

The hydrocarbon feed can be any reformable alkane, preferably a $C_1$-$C_4$ alkane, and more preferably a feed containing methane or natural gas which contains a high concentration of methane, e.g., greater than about 70 wt%, often greater than about 80 vol% methane. Natural gas also contains up to about 10 vol% ethane, up to about 3 vol% propane and trace amounts of $C_4$-$C_8$. Condensate and contaminants, such as hydrogen sulfide should be removed, e.g., by well known processes such as zinc oxide guard beds.

The heat carrying solids can be those useful in partial oxidation reactions, steam reforming reactions, fluid beds or spouted beds. They may be Group II oxides, rare earth oxides, alpha alumina, modified alpha aluminas, or alpha alumina containing oxides, e.g., barium hexaluminate. These materials are generally attrition resistant, have a mean particle diameter of 20-150 μm, preferably 30-150 μm, more preferably 30-120 μm and are substantially free of silica. Silica tends to volatilize at reaction temperatures impairing the integrity of the particles. Silica content should, therefore, be less than 1 wt%, preferably less than 0.5 wt%. Preferred materials are alpha aluminas, fused or tabular, and rare earth stabilized aluminas with about 0.1-1.0 wt% rare earth oxides, e.g., lanthanum.

The solids may be catalytic or non-catalytic or mixtures of catalytic and non-catalytic solids, the materials described above generally being non-catalytic. Catalytic materials are conventional steam reforming catalysts and may be uranium, Group VII metals, or Group VIII noble or base metals. Preferred catalysts are Group VIII metals, particularly nickel, and are supported on inorganic oxides, or in some instances may be supported on the heat carrying solids. Nickel or other catalytic metals, may be deposited on the solids by any of the well known methods including: incipient wetness, impregnation, spraying, kneading, etc. The amount of nickel present may vary from at least 0.01 wt% based on total solids, preferably at least 0.02 wt%, more preferably 0.02-5.0 wt%, still more preferably 0.02 to 3.0 wt%, all based on total solids in the reaction zone.

Any suitable apparatus for carrying out partial oxidation or steam reforming processes may be employed. However, the use of spouted bed or fluid bed, preferably fluid bed reactors are used. In a fluid bed system the injected gas, feed or steam fluidizes the bed of solids in the reaction zone. Synthesis gas product is removed over head above the dilute phase. The product gas may also contain some unreacted feed, steam, $CO_2$ and entrained solids. The solids are separated by conventional means, e.g., cyclones, and may be returned to the reaction zone through diplegs.

The mixing zone for the feed and oxygen may be a line or a separate vessel outside of reactor containing the reaction zone or the mixing zone may be a separate zone in the reactor from which the mixture is injected into the reaction zone of the reactor.

## Claims

1. A steam reforming-partial oxidation process for producing hydrogen and carbon monoxide by reacting, in a reaction zone containing a fluid bed of solids, a hydrocarbon feed, oxygen, steam and, optionally, carbon dioxide; which process comprises (a) premixing, in a mixing zone, at least the major portion of the hydrocarbon feed and a portion of the oxygen required for the process, such oxygen portion being less than that required to be at the upper explosive limit of the oxygen-feed mixture, (b) transferring said mixture to the reaction zone separately from the remaining oxygen required for the process, and separately from any remaining feed; and (c) injecting each of the remaining oxygen and any remaining feed separately into the reaction zone.

2. The process of claim 1, wherein the feed is at least one $C_1$-$C_4$ alkane.

3. The process of claim 2, wherein the feed comprises methane.

4. The process of any preceding claim, wherein the portion of oxygen mixed with the feed is about 5-30% of the total oxygen required.

5. The process of any preceding claim, wherein the portion of oxygen mixed with the feed is about 10-15% of the oxygen required.

6. The process of any preceding claim, wherein the molar ratio of total oxygen to feed is about 0.2:1 to 1:1.

7. The process of any preceding claim, wherein steam is mixed with the feed and oxygen in the mixing zone.

8. The process of any preceding claim, wherein a catalyst is employed in the reaction zone.

9. The process of claim 8, wherein the catalyst is nickel.

10. The process of any preceding claim, wherein the reaction zone contains both catalytic and non-catalytic solids.

**Patentansprüche**

1. Ein Dampfreformierungs- und partielles Oxidations-Verfahren zur Herstellung von Wasserstoff und Kohlenmonoxid, indem in einer Reaktionszone, die ein Wirbelbett aus Feststoffen enthält, ein Kohlenwasserstoffeinsatzmaterial, Sauerstoff, Dampf und gegebenenfalls Kohlendioxid umgesetzt werden, wobei das Verfahren (a) ein Vormischen in einer Mischzone von mindestens dem größeren Teil des Kohlenwasserstoffeinsatzmaterials und eines Teils des für das Verfahren benötigten Sauerstoffs, wobei dieser Sauerstoffanteil kleiner ist, als derjenige, der an der oberen Explosionsgrenze der Sauerstoff/Einsatzmaterialmischung benötigt wird, (b) ein Überführen dieser Mischung in die Reaktionszone getrennt von dem restlichen für das Verfahren benötigten Sauerstoff und separat von irgendeinem restlichen Einsatzmaterial und (c) ein getrenntes Einspritzen von jedem des restlichen Sauerstoffs und irgendeines restlichen Einsatzmaterials in die Reaktionszone umfaßt.

2. Verfahren nach Anspruch 1, bei dem das Einsatzmaterial mindestens ein $C_1$- bis $C_4$-Alkan ist.

3. Verfahren nach Anspruch 2, bei dem das Einsatzmaterial Methan umfaßt.

4. Verfahren nach einem der vorhergehenden Ansprüche, bei dem der Teil des Sauerstoffs, der mit dem Einsatzmaterial gemischt wird, etwa 5 bis 30 % des insgesamt benötigten Sauerstoffs ausmacht.

5. Verfahren nach einem der vorhergehenden Ansprüche, bei dem der Teil der Sauerstoffs, der mit dem Einsatzmaterial gemischt wird, etwa 10 bis 15 % des benötigten Sauerstoffs ausmacht.

6. Verfahren nach einem der vorhergehenden Ansprüche, bei dem das Molverhältnis des gesamtem Sauerstoffs zum Einsatzmaterial etwa 0,2 : 1 bis 1 : 1 beträgt.

7. Verfahren nach einem der vorhergehenden Ansprüche, bei dem Dampf mit dem Einsatzmaterial und dem Sauerstoff in der Mischzone gemischt wird.

8. Verfahren nach einem der vorhergehenden Ansprüche, bei dem in der Reaktionszone ein Katalysator verwendet wird.

9. Verfahren nach Anspruch 8, bei dem der Katalysator Nickel ist.

10. Verfahren nach einem der vorhergehenden Ansprüche, bei dem die Reaktionszone sowohl katalytische als nicht-katalytische Feststoffe enthält.

**Revendications**

1. Procédé d'oxydation partielle et de reformage à la vapeur d'eau pour produire de l'hydrogène et du monoxyde de carbone en faisant réagir, dans une zone réactionnelle contenant un lit fluidisé de solides, une charge d'hydrocarbure, de l'oxygène, de la vapeur d'eau et, en option, de l'anhydride carbonique, ledit procédé comprenant les étapes suivantes: (a) le prémélange, dans une zone de mélange, d'au moins la majeure partie de la charge d'hydrocarbure et d'une partie de l'oxygène requis pour le procédé, cette partie de l'oxygène étant inférieure à celle requise pour se trouver à la limite explosive supérieure du mélange oxygène-charge, (b) le transfert dudit mélange à la zone réactionnelle séparément de l'oxygène restant requis pour le procédé et séparément de toute charge restante et © l'injection de l'oxygène restant et de toute charge restante séparément dans la zone réactionnelle.

2. Procédé selon la revendication 1, dans lequel la charge est au moins un alcane en $C_1$-$C_4$.

3. Procédé selon la revendication 2, dans lequel la charge comprend du méthane.

4. Procédé selon l'une quelconque des revendications précédentes, dans lequel la partie d'oxygène mélangée à la charge est d'environ 5 à 30% de la quantité totale d'oxygène requise.

5. Procédé selon l'une quelconque des revendications précédentes, dans lequel la partie d'oxygène mélangée à la charge est d'environ 10 à 15 % de la quantité d'oxygène requise.

6. Procédé selon l'une quelconque des revendications précédentes, dans lequel le rapport molaire de la quantité totale d'oxygène à la charge est d'environ 0,2:1 à 1:1.

7. Procédé selon l'une quelconque des revendications précédentes, dans lequel de la vapeur d'eau est mélangée à la charge et à l'oxygène dans la zone de mélange.

8. Procédé selon l'une quelconque des revendications précédentes, dans lequel un catalyseur est utilisé dans la zone réactionnelle.

9. Procédé selon la revendication 8, dans lequel le catalyseur est le nickel.

10. Procédé selon l'une quelconque des revendications précédentes, dans lequel la zone réactionnelle contient à la fois des solides catalytiques et des solides non catalytiques.